# FASCICULE DE BREVET EUROPEEN

(11) **EP 3 977 577 B1**
(45) Date de publication et mention de la délivrance du brevet: **03.01.2024**
(21) Numéro de dépôt: 19739669.0
(22) Date de dépôt: 29.05.2019
(51) Int. Cl.: H02H 3/08, H02H 3/10, H02H 3/16, H02H 3/20, H02H 3/33, H01H 77/06, H01H 83/20, H01H 71/28, H01H 83/22, H02H 1/00, H02H 9/04

(54) **APPAREIL DE PROTECTION DE LIGNE (L) ELECTRIQUE POUR DÉTECTER UN DÉFAUT DE FUITE, DE COURT-CIRCUIT, DE SURINTENSITÉ ET D'ARC**
SCHUTZVORRICHTUNG FÜR STROMLEITUNG (L) ZUM ERKENNEN EINES LECKFEHLERS, KURZSCHLUSSES, FEHLERS, ÜBERSTROMFEHLERS UND LICHTBOGENFEHLERS
ELECTRIC LINE (L) PROTECTION DEVICE FOR DETECTING A LEAKAGE FAULT, A SHORT-CIRCUIT, FAULT, AN OVERCURRENT FAULT AND AN ARC FAULT

(43) Date de publication de la demande: 06.04.2022
(73) Titulaire: HAGER-ELECTRO SAS, 67210 Obernai (FR)
(72) Inventeur: CALMELET, Nicolas, 67210 OBERNAI (FR); GIORDANO, Jean, 38570 GONCELIN (FR); MERAND, Denis, 57530 COURCELLES-CHAUSSY (FR)
(74) Mandataire: Cabinet Nuss
(86) Numéro de dépôt international: PCT/FR2019/000083
(87) Numéro de publication internationale: WO 2020/240097

(56) Documents cités:
- EP-A1- 2 455 961
- EP-A2- 0 074 576
- WO-A1-03/079388
- US-A- 5 999 384

## Description

La présente invention se rapporte au domaine des appareils de protection de lignes de courant électrique. Elle a pour objet un appareil de protection de ligne électrique.

Les appareils de protection de ligne électrique, notamment les disjoncteurs différentiels, sont prévus pour assurer la protection de la ligne électrique et/ou des personnes contre des défauts électriques survenant dans ladite ligne tels que des courants de fuite, des courts circuits, des surcharges ou encore des arcs électriques.

A cet effet, ces appareils de protection sont configurés pour déclencher dans des conditions bien particulières lorsqu'il se produit :
- un déséquilibre entre la somme des courants entrants et la somme des courants sortants de la ligne protégée par un tel appareil, ce qui correspond à une protection dite « différentielle », contre les courants de fuite, et/ou
- lorsque l'intensité du courant est anormalement élevée, ce qui correspond à une protection dite « magnétique », contre les courts circuits, et/ou
- lorsqu'une quantité trop importante de courant passe dans le conducteur électrique concerné, ce qui correspond à une protection contre les surcharges ou les surintensités de faible amplitude prolongées.

Les fonctions de protection différentielle et de protection contre les courts circuits sont généralement assurées par des bobines entourant un noyau magnétique mobile susceptible de se déplacer, sous l'effet d'un champ magnétique créé par lesdites bobines, d'une position de repos à une position d'actionnement permettant d'actionner une serrure de déclenchement. Plus précisément, la fonction de protection différentielle est généralement assurée par un circuit de détection du défaut de type différentiel survenant dans la ligne à protéger et par une première bobine formant un actionneur générant, en réponse audit défaut différentiel détecté, un champ magnétique ayant pour effet de déplacer ledit noyau. La fonction de protection contre un court-circuit est généralement assurée par une deuxième bobine apte à détecter un court-circuit dans la ligne et à générer un champ magnétique en réponse à un défaut du type court-circuit détecté sur la ligne à protéger.

La fonction de protection contre les surcharges est généralement assurée grâce à un système bilame comprenant deux lames métalliques de coefficients de dilatation différents qui se dilatent sous l'effet de la chaleur suite à une augmentation prolongée du courant et qui, lors de leur déformation, viennent appuyer sur un contact actionnant l'interruption du courant dans la ligne.

D'autres fonctions de protection telle que la protection contre les arcs électriques sont également assurées par ces appareils de protection, seule ou en combinaison avec au moins l'une des fonctions de protection précitées afin de permettre un niveau de protection supérieur de l'appareil de protection. Un détecteur d'arc électrique est également connu sous l'appellation anglais AFDD (Arc fault Détection Device) et comprend généralement un mécanisme intégré ou est associé à un appareil, tel qu'un disjoncteur différentiel, comprenant un mécanisme décrit ci-après permettant de déclencher l'appareil pour ouvrir le circuit ou la ligne en aval lors de la détection d'un défaut d'arc électrique.

Le déclenchement de l'appareil de protection suite à un défaut du type précité dans la ligne de courant électrique entraîne l'interruption du courant dans ladite ligne électrique. Une telle interruption est réalisée par un mécanisme, connu sous le nom de serrure de déclenchement, comprenant des contacts électriques mobiles et des contacts électriques fixes configurés pour adopter une première position, dans laquelle le contact fixe et le contact mobile sont en contact électrique l'un avec l'autre et une deuxième position dans laquelle ils sont écartés l'un de l'autre. Dans une ligne électrique à protéger comprenant une ligne de phase et une ligne de neutre, la serrure de déclenchement comprend généralement une paire de contacts fixe et mobile pour la ligne de phase et une paire de contacts fixe et mobile pour la ligne de neutre. L'ouverture des contacts entraîne alors l'interruption du courant dans la ligne en aval desdits contacts c'est-à-dire vers et dans la ou les charges présentes dans ladite ligne à protéger.

De tels appareils, selon la ou les protections assurées sont généralement connus sous les noms de disjoncteur ou d'interrupteur.

Toutefois, plusieurs problèmes se posent avec de tels appareils de protection. Un premier problème est l'échauffement procuré par le système bilame et un deuxième problème est l'encombrement résultant de l'ensemble des mécanismes assurant ces différentes protections et équipant ces appareils.

Le document FR3028662 divulgue une solution compacte permettant d'assurer différents types de protection avec un même actionneur à enroulement multiple comportant une bobine, dite bobine différentielle, générant un champ magnétique en réponse à un défaut de type différentiel et une bobine magnétique imbriquée avec la bobine différentielle générant un champ magnétique en réponse à un défaut de type court-circuit. Il comprend en outre une troisième bobine enroulée en court-circuit et imbriquée avec lesdites bobines différentielle et magnétique. Mais cette solution ne permet pas d'assurer d'autres fonctions de protection telles que la détection d'arcs électriques (AFDD) ou la protection contre les surcharges. Autres appareils de protection compacts avec des actionneurs à enroulements multiples sont divulgués par les documents WO03/079388, EP0074576, EP2455961.

Des solutions faisant intervenir des capteurs de type shunt pour détecter une surcharge ne permettent pas de résoudre les problèmes d'échauffement.

Des solutions utilisant des capteurs de type Rogowski ou tore sont volumineux et ne permettent pas de résoudre le problème de l'encombrement. En outre ces solutions permettent difficilement l'ajout d'une fonction de protection contre les défauts d'arc électrique, notamment pour des calibres allant jusqu'à 45A sans modification de la taille de l'appareil de protection.

La présente invention a pour but de pallier ces inconvénients en proposant un appareil de protection de ligne électrique permettant d'assurer une pluralité de protections et plus particulièrement au moins les protections contre les court-circuit, les courants de fuite et les surcharges, tout en conférant à l'appareil un encombrement réduit.

A cet effet, la présente invention a pour objet appareil de protection de ligne électrique, ledit appareil comprenant, dans un boîtier qu'il comprend, d'une part, une pluralité de bobines et un élément d'actionnement mobile configuré pour être déplacé, sous l'effet d'un champ magnétique, d'une position de repos à une position d'actionnement, à savoir une première bobine formant un actionneur apte et destiné à générer ledit champ magnétique en réponse à un défaut du type différentiel survenant dans ladite ligne, une deuxième bobine apte et destinée à générer ledit champ magnétique en réponse à un défaut de type court-circuit survenant dans ladite ligne et une troisième bobine et, d'autre part, une serrure de déclenchement apte et destinée, lors de son actionnement sous l'effet du déplacement dudit élément d'actionnement mobile, à passer d'un premier état à un deuxième état, une unité de commande apte et destinée, suite à la détection d'un défaut de type différentiel, à commander la première bobine pour générer ledit champ magnétique et un circuit de détection dudit défaut de type différentiel relié fonctionnellement à l'unité de commande et se caractérisant essentiellement en ce que la troisième bobine est apte et destinée à être traversée par un courant électrique proportionnel au courant électrique traversant ladite deuxième bobine et en ce qu'il comprend une unité de traitement électronique reliée fonctionnellement à ladite troisième bobine et étant configurée pour traiter les signaux représentatifs de la valeur de l'intensité dudit courant électrique proportionnel de sorte à déterminer, par comparaison de ladite valeur avec au moins une valeur seuil prédéterminée, si au moins un seuil de déclenchement a été franchi et, dans ce cas, pour commander, via l'unité de commande, la première bobine générant ledit champ magnétique.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

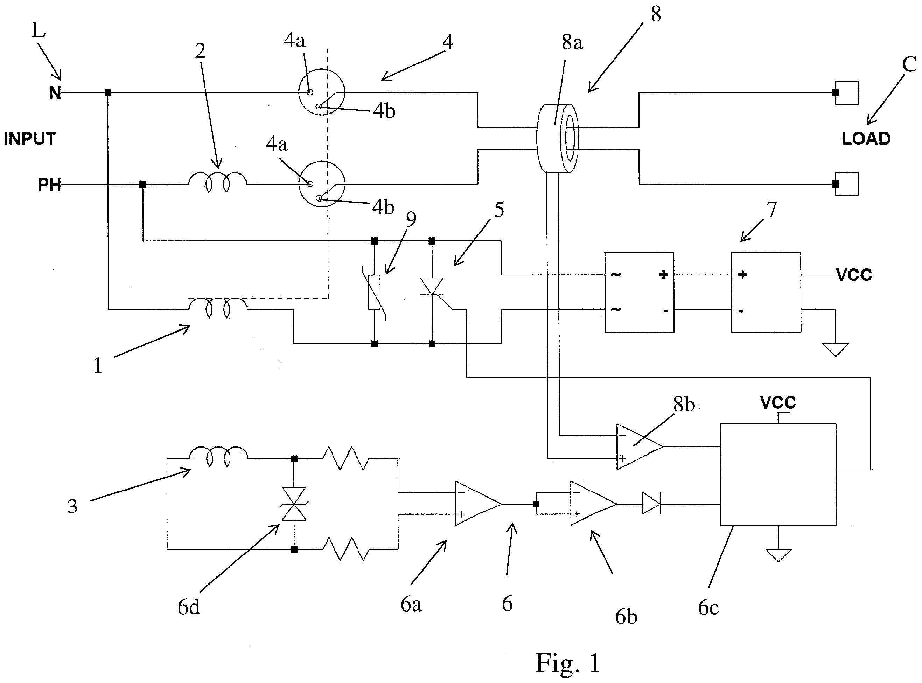

La figure représente un schéma de principe de l'appareil de protection de ligne électrique selon la présente invention à l'état de connexion électrique à ladite ligne électrique à protéger entre la phase et le neutre de cette dernière et en amont d'une charge présente sur ladite ligne.

La figure montre un appareil de protection de ligne L électrique, ledit appareil comprenant, dans un boîtier qu'il comprend :

- une pluralité de bobines 1, 2, 3 et un élément d'actionnement mobile (non représenté sur la figure annexée) configuré pour être déplacé, sous l'effet d'un champ magnétique, d'une position de repos à une position d'actionnement, à savoir une première bobine 1 formant un actionneur apte et destiné à générer ledit champ magnétique en réponse à un défaut du type différentiel survenant dans ladite ligne L, une deuxième bobine 2 apte et destinée à générer ledit champ magnétique en réponse à un défaut de type court-circuit survenant dans ladite ligne L et une troisième bobine 3,
- une serrure de déclenchement 4 apte et destinée, lors de son actionnement sous l'effet du déplacement dudit élément d'actionnement mobile, à passer d'un premier état à un deuxième état,
- une unité de commande 5 apte et destinée, suite à la détection d'un défaut de type différentiel, à commander la première bobine 1 pour générer ledit champ magnétique, et
- un circuit de détection 8 dudit défaut de type différentiel relié fonctionnellement à l'unité de commande 5.

Conformément à la présente invention, la troisième bobine 3 est apte et destinée à être traversée par un courant électrique proportionnel au courant électrique traversant ladite deuxième bobine 2. La troisième bobine 3 forme ainsi un capteur de mesure de courant permettant de mesurer ledit courant proportionnel induit dans ladite troisième bobine 3 en association avec l'unité de traitement électronique 6 mentionnée ci-après.

Toujours conformément à la présente invention, un tel appareil de protection comprend en outre une unité de traitement électronique 6 reliée fonctionnellement à ladite troisième bobine 3 et étant configurée pour traiter les signaux représentatifs de la valeur de l'intensité dudit courant électrique proportionnel de sorte à déterminer, par comparaison de ladite valeur avec au moins une valeur seuil prédéterminée, si au moins un seuil de déclenchement a été franchi et, dans ce cas, pour commander, via l'unité de commande 5, la première bobine 1 générant ledit champ magnétique. On comprend que ce dernier a pour effet de déplacer l'élément d'actionnement mobile qui actionne alors la serrure de déclenchement 4 en la faisant passer dans le deuxième état.

Le deuxième état correspond à un état où le passage du courant électrique est interrompu en aval dans la ligne L à protéger, c'est-à-dire dans la partie de la ligne concernée par le défaut détecté.

La figure unique montre les trois bobines 1, 2 et 3 de manière séparée, mais en réalité, dans une forme de réalisation préférentielle, la première bobine 1 et la deuxième bobine 2 peuvent entourer l'élément d'actionnement mobile et lesdites première et deuxième bobines 1 et 2 peuvent être imbriquées l'une avec l'autre. De préférence, la troisième bobine 3 peut être imbriquée avec lesdites première et deuxième bobines 1 et 2. On comprendra que la troisième bobine 3 peut ne pas être imbriquée avec les deux autres bobines 1 et 2.

La troisième bobine 3, associée à l'unité de traitement électronique 6, peut ainsi fournir une tension proportionnelle au courant de la charge C présente dans la ligne L électrique à protéger.

La troisième bobine 3 offre ainsi l'avantage de ne pas être reliée directement au potentiel auquel est connecté l'appareil de protection dans la ligne électrique L à protéger mais d'être isolée de ce dernier en fonctionnant comme un transformateur électrique.

De préférence, l'inductance de la première bobine 1 peut être de l'ordre de quelques mH. L'inductance de la deuxième bobine 2 peut être de l'ordre de quelques µH. L'inductance de la troisième bobine 3 peut être de l'ordre quelques mH.

La figure montre plus particulièrement que la première bobine 1 et la deuxième bobine 2 sont aptes et destinées à être connectées, à l'état monté dans la ligne électrique L à protéger telle que représentée sur ladite figure, entre la phase PH et le neutre N et plus particulièrement en parallèle.

En outre, on peut voir sur la figure que l'appareil de protection est disposé, c'est-à-dire connecté dans la ligne électrique L, en amont d'une charge C présente dans cette dernière. Plus particulièrement, on peut voir que deux paires de contacts 4a, 4b sont disposées, l'une au niveau de la phase PH et l'autre au niveau du neutre N, en amont de la charge C de sorte, lorsqu'ils sont activés à l'état de fermeture c'est-à-dire dans le deuxième état de la serrure de déclenchement 4, à interrompre le passage du courant électrique en aval desdits contacts, plus particulièrement dans une charge C afin de protéger cette dernière ou la personne en contact avec cette dernière selon le type de défaut détecté.

La serrure de déclenchement 4 peut comprendre en outre un organe de manoeuvre, non représenté, se présentant par exemple sous la forme d'un levier, relié fonctionnellement à la serrure de déclenchement 4, et pouvant être saillant d'une face du boîtier, pour permettre d'actionner manuellement la serrure de déclenchement 4. Les contacts 4a, 4b de la serrure de déclenchement 4 peuvent comprendre des contacts mobiles 4b et des contacts fixes 4a. La serrure de déclenchement 4 peut alors être configurée pour commuter depuis une première position, correspondant à l'état de fermeture, dans laquelle les contacts fixes 4a sont en contact avec les contacts mobiles 4b respectifs et, comme cela est représenté sur la figure, vers une deuxième position, correspondant à l'état d'ouverture, dans laquelle les contacts fixes 4a sont éloignés des contacts mobiles 4b.

L'unité de commande 5 peut consister en un organe de commande tel que par exemple un thyristor qui peut être relié à l'unité de traitement électronique 6 de sorte à pouvoir être activé par cette dernière lorsque le ou l'un des seuils de déclenchement est atteint ou franchi et être relié à la première bobine 1. L'organe de commande 5 peut en outre être connecté aux bornes d'une alimentation 7 en tension continue Vcc. L'organe de commande 5 peut alors être apte et destiné à commander ou piloter la première bobine 1 lorsqu'il est activé par l'unité de traitement électronique 6, c'est-à-dire que ladite commande de la première bobine 1 a pour effet que celle-ci est parcourue par un courant électrique susceptible de générer, ou de créer, le champ magnétique permettant de déplacer l'élément d'actionnement mobile actionnant les contacts 4a, 4b pour les faire passer de l'état d'ouverture à l'état de fermeture. Un composant de protection 9 tel qu'une varistance peut être prévue pour protéger le thyristor en cas de surtension.

Comme on peut le voir sur la figure, l'unité de traitement électronique 6 peut comprendre un circuit de traitement électronique 6c, tel qu'un microcontrôleur ou un processeur, qui peut être configuré pour traiter lesdits signaux représentatifs de la valeur de l'intensité dudit courant électrique proportionnel et pour commander, via l'unité de commande 5, la première bobine 1 générant ledit champ magnétique.

De préférence, l'unité de traitement électronique 6 peut comprendre en outre un circuit d'amplification 6a relié à la troisième bobine 3 et un circuit de filtrage 6b relié audit circuit d'amplification 6a. Le circuit de traitement électronique 6c, tel que par exemple le microcontrôleur ou le processeur, peut alors être relié audit circuit de filtrage 6b d'une part et à l'unité de commande 5 d'autre part. Le circuit d'amplification 6a, le circuit de filtrage 6b et le circuit de traitement électronique 6c peuvent de préférence être montés en série.

L'unité de traitement électronique 6, plus particulièrement le cas échéant le circuit de traitement électronique 6c tel que le microcontrôleur ou le processeur, peut être configuré(e) pour réaliser, à partir du traitement des signaux représentatifs de la valeur de l'intensité du courant électrique proportionnel traversant ladite troisième bobine 3, au moins l'une des fonctions de mesure et/ou de détection suivantes :
- mesure d'énergie en courant et/ou en tension,
- détection d'arc électrique,
- mesure de surtension et/ou de sous tension.

L'unité de traitement électronique 6 peut en outre être configurée pour déterminer, à partir du traitement des signaux représentatifs de la valeur de l'intensité du courant électrique proportionnel traversant ladite troisième bobine 3, des données relatives à la consommation du courant électrique.

L'unité de traitement électronique 6 peut en outre comprendre une unité de communication permettant de transmettre des données relatives aux valeurs mesurées par la troisième bobine 3 et/ou à la consommation de courant électrique, et/ou de recevoir des données permettant de configurer à distance le fonctionnement de l'unité de traitement électronique 6 par exemple pour en modifier les paramètres tels que la ou les valeurs seuils prédéterminées.

D'autre part, comme on peut le voir sur la figure annexée, dans une forme de réalisation préférentielle du circuit de détection 8, celui-ci peut comprendre, d'une part, un détecteur 8a de défaut du type différentiel, tel que par exemple un tore, et, d'autre part, le circuit de traitement électronique 6c qui peut alors être configuré en outre pour traiter le signal électrique, représentatif du défaut de type différentiel, généré par ledit détecteur 8a en vue de déterminer la présence dudit défaut de type différentiel sur la ligne L à protéger et pour activer, suite à ladite détection, l'unité de commande 5 de la première bobine 1. Le détecteur 8a, tel que le tore représenté sur la figure annexée, peut être disposé fonctionnellement dans la ligne L en aval de la serrure de déclenchement 4 et en amont de la charge C présente dans la ligne L à protéger.

De préférence, le circuit de traitement électronique 6c peut être relié fonctionnellement au détecteur 8a, tel que le tore, via un amplificateur opérationnel 8b que peut comprendre en outre, préférentiellement, le circuit de détection 8.

La présente invention peut prévoir une autre forme de réalisation, non représentée, où le détecteur 8a peut être relié fonctionnellement à un circuit de traitement électronique distinct du circuit de traitement électronique 6c relié à la troisième bobine 3. Toutefois, la forme de réalisation représentée sur la figure annexée, dans laquelle le détecteur 8a est relié à l'unité de traitement électronique 6c reliée à la troisième bobine 3, permet de réduire le prix de revient et de diminuer l'encombrement dans l'appareil de protection.

Les valeurs d'inductance de chaque bobine 1, 2 ou 3 sont spécifiques et peuvent être déterminées dans le but de conférer à l'appareil de protection un fonctionnement optimal de chaque fonction, par exemple l'alimentation, les mesures et le déclenchement de la serrure de déclenchement 4.

On peut encore voir sur la figure que l'unité de traitement électronique 6 peut comprendre un composant de protection 6d électronique tel qu'une diode Zener ou une diode Transil connectée en parallèle avec la troisième bobine 3. Un tel composant de protection 6d permet de protéger les circuits, notamment en cas de surtension ou de fortes impulsions. La diode Transil peut-être une diode unidirectionnelle ou, de préférence, comme on peut le voir sur la figure, une diode Transil bidirectionnelle, c'est-à-dire équivalente à deux diodes Zener en opposition montées en série.

Ainsi un tel appareil de protection permet d'offrir un produit doté d'une multitude de fonctions de protection tout en évitant les échauffements par la présence de l'association de la troisième bobine 3 et de l'unité de traitement électronique 6 et en bénéficiant d'une grande compacité par l'imbrication des deux bobines 1 et 2, le cas échéant par l'imbrication des trois bobines 1, 2 et 3.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Appareil de protection de ligne (L) électrique, ledit appareil comprenant, dans un boîtier qu'il comprend, d'une part, une pluralité de bobines (1, 2, 3) et un élément d'actionnement mobile configuré pour être déplacé, sous l'effet d'un champ magnétique, d'une position de repos à une position d'actionnement, à savoir une première bobine (1) formant un actionneur apte et destiné à générer ledit champ magnétique en réponse à un défaut du type différentiel survenant dans ladite ligne (L), une deuxième bobine (2) apte et destinée à générer ledit champ magnétique en réponse à un défaut de type court-circuit survenant dans ladite ligne (L) et une troisième bobine (3) et, d'autre part, une serrure de déclenchement (4) apte et destinée, lors de son actionnement sous l'effet du déplacement dudit élément d'actionnement mobile, à passer d'un premier état à un deuxième état, une unité de commande (5) apte et destinée, suite à la détection d'un défaut de type différentiel, à commander la première bobine (1) pour générer ledit champ magnétique et un circuit de détection (8) dudit défaut de type différentiel relié fonctionnellement à l'unité de commande (5), la troisième bobine (3) étant apte et destinée à être traversée par un courant électrique proportionnel au courant électrique traversant ladite deuxième bobine (1) et
**caractérisé en ce qu'**il comprend une unité de traitement électronique (6) reliée fonctionnellement à ladite troisième bobine (3) et étant configurée pour traiter les signaux représentatifs de la valeur de l'intensité dudit courant électrique proportionnel de sorte à déterminer, par comparaison de ladite valeur avec au moins une valeur seuil prédéterminée, si au moins un seuil de déclenchement a été franchi et, dans ce cas, pour commander, via l'unité de commande (5), la première bobine (1) générant ledit champ magnétique.

2. Appareil de protection, selon la revendication 1, **caractérisé en ce que** l'unité de traitement électronique (6) comprend un circuit de traitement électronique (6c) tel qu'un microcontrôleur ou un processeur, configuré pour traiter lesdits signaux représentatifs de la valeur de l'intensité dudit courant électrique proportionnel et pour commander, via l'unité de commande (5), la première bobine (1) générant ledit champ magnétique.

3. Appareil de protection, selon la revendication 2, **caractérisé en ce que** l'unité de traitement électronique (6) comprend en outre un circuit d'amplification (6a) relié à la troisième bobine (3) et un circuit de filtrage (6b) relié audit circuit d'amplification (6a), le circuit de traitement électronique (6c) étant relié audit circuit de filtrage (6b) d'une part et à l'unité de commande (5) d'autre part.

4. Appareil de protection, selon la revendication 2 ou la revendication 3, **caractérisé en ce que** le circuit de détection (8) d'un défaut du type différentiel comprend, d'une part, un détecteur (8a) de défaut du type différentiel, tel que par exemple un tore et, d'autre part, le circuit de traitement électronique (6c) qui est configuré en outre pour traiter le signal électrique, représentatif du défaut de type différentiel, généré par ledit détecteur (8a) en vue de déterminer la présence dudit défaut de type différentiel sur la ligne (L) à protéger et pour activer, suite à ladite détection, l'unité de commande (5) de la première bobine (1).

5. Appareil de protection, selon l'une quelconque des revendications 1 à 4, **caractérisé en ce que** l'unité de traitement électronique (6), plus particulièrement le cas échéant le circuit de traitement électronique (6c) tel que le microcontrôleur ou le processeur, est configuré(e) pour réaliser, à partir du traitement des signaux représentatifs de la valeur de l'intensité du courant électrique proportionnel traversant ladite troisième bobine (3), au moins l'une des fonctions de mesure et/ou de détection suivantes :
- mesure d'énergie en courant et/ou en tension,
- détection d'arc électrique,
- détection de surtension et/ou de détection de sous-tension.

6. Appareil de protection, selon l'une quelconque des revendications 1 à 5, **caractérisé en ce que** l'unité de traitement électronique (6) est en outre configurée pour déterminer, à partir du traitement des signaux représentatifs de la valeur de l'intensité du courant électrique proportionnel traversant ladite troisième bobine (3), des données relatives à la consommation du courant électrique.

7. Appareil de protection, selon l'une quelconque des revendications 1 à 6, **caractérisé en ce que** l'unité de traitement électronique (6) comprend en outre une unité de communication permettant de transmettre des données relatives aux valeurs mesurées par la troisième bobine (3) et/ou, le cas échéant à la consommation de courant électrique, et/ou de recevoir des données permettant de configurer à distance le fonctionnement de l'unité de traitement électronique (6) pour en modifier les paramètres tels que la ou les valeurs seuils prédéterminées.

8. Appareil de protection selon l'une quelconque des revendications 1 à 7, **caractérisé en ce qu'**il comprend en outre un composant de protection (6d) électronique, tel qu'une diode Zener ou une diode Transil, connectée en parallèle avec la troisième bobine (3).

9. Appareil de protection, selon l'une quelconque des revendications 1 à 8, **caractérisé en ce que** la première bobine (1) et la deuxième bobine (2) entourent l'élément d'actionnement mobile et **en ce que** lesdites première et deuxième bobines (1, 2) sont imbriquées l'une avec l'autre.

10. Appareil de protection, selon la revendication 9, **caractérisé en ce que** la troisième bobine (3) est imbriquée avec lesdites première et deuxième bobines (1, 2).

## Patentansprüche

1. Schutzgerät einer elektrischen Leitung (L), wobei das Gerät in einem Gehäuse, das es enthält, einerseits eine Vielzahl von Spulen (1, 2, 3) und ein mobiles Betätigungselement, das konfiguriert ist, unter der Wirkung eines Magnetfelds von einer Ruhestellung in eine Betätigungsstellung verschoben zu werden, d.h. eine erste Spule (1), die ein Betätigungsglied bildet, das geeignet und dazu bestimmt ist, das Magnetfeld als Antwort auf einen in der Leitung (L) auftretenden Differenzialfehler zu erzeugen, eine zweite Spule (2), die geeignet und dazu bestimmt ist, das Magnetfeld als Antwort auf einen in der Leitung (L) auftretenden Kurzschlussfehler zu erzeugen, und eine dritte Spule (3), und andererseits ein Auslöseschloss (4), das geeignet und dazu bestimmt ist, bei seiner Betätigung unter der Wirkung der Verschiebung des mobilen Betätigungselements von einem ersten Zustand in einen zweiten Zustand überzugehen, eine Steuereinheit (5), die geeignet und dazu bestimmt ist, nach der Erkennung eines Differenzialfehlers die erste Spule (1) zu steuern, um das Magnetfeld zu erzeugen, und eine Erkennungsschaltung (8) des Differenzialfehlers enthält, die funktionell mit der Steuereinheit (5) verbunden ist, wobei die dritte Spule (3) geeignet und dazu bestimmt ist, von einem zum die zweite Spule (1) durchfließenden elektrischen Strom proportionalen elektrischen Strom durchflossen zu werden, und
**dadurch gekennzeichnet, dass** es eine elektronische Verarbeitungseinheit (6) enthält, die funktionell mit der dritten Spule (3) verbunden und konfiguriert ist, die für den Wert der Stärke des proportionalen elektrischen Stroms repräsentativen Signale zu verarbeiten, um durch Vergleich des Werts mit mindestens einem vorbestimmten Schwellenwert zu bestimmen, ob mindestens eine Auslöseschwelle überschritten wurde, und in diesem Fall, um über die Steuereinheit (5) die das Magnetfeld erzeugende erste Spule (1) zu steuern.

2. Schutzgerät nach Anspruch 1, **dadurch gekennzeichnet, dass** die elektronische Verarbeitungseinheit (6) eine elektronische Verarbeitungsschaltung (6c) wie einen Mikrocontroller oder einen Prozessor enthält, die konfiguriert ist, die für den Wert der Stärke des proportionalen elektrischen Stroms repräsentativen Signale zu steuern, und über die Steuereinheit (5) die das Magnetfeld erzeugende erste Spule (1) zu steuern.

3. Schutzgerät nach Anspruch 2, **dadurch gekennzeichnet, dass** die elektronische Verarbeitungseinheit (6) außerdem eine mit der dritten Spule (3) verbundene Verstärkungsschaltung (6a) und eine mit der Verstärkungsschaltung (6a) verbundene Filterschaltung (6b) enthält, wobei die elektronische Verarbeitungsschaltung (6c) einerseits mit der Filterschaltung (6b) und andererseits mit der Steuereinheit (5) verbunden ist.

4. Schutzgerät nach Anspruch 2 oder Anspruch 3, **dadurch gekennzeichnet, dass** die Erkennungsschaltung (8) eines Differenzialfehlers einerseits einen Differenzialfehler-Detektor (8a), wie zum Beispiel einen Torus, und andererseits die elektronische Verarbeitungsschaltung (6c) enthält, die außerdem konfiguriert ist, das für den Differenzialfehler repräsentative Signal zu verarbeiten, das vom Detektor (8a) erzeugt wird, um das Vorhandensein des Differenzialfehlers auf der zu schützenden Leitung (L) zu bestimmen, und um nach der Erkennung die Steuereinheit (5) der ersten Spule (1) zu aktivieren.

5. Schutzgerät nach einem der Ansprüche 1 bis 4, **dadurch gekennzeichnet, dass** die elektronische Verarbeitungseinheit (6), ggf. insbesondere die elektronische Verarbeitungsschaltung (6c) wie der Mikrocontroller oder der Prozessor, konfiguriert ist, ausgehend von der Verarbeitung der für den Wert der Stärke des die dritte Spule (3) durchfließenden proportionalen elektrischen Stroms repräsentativen Signale mindestens eine der folgenden Mess- und/oder Erkennungsfunktionen zu realisieren:
- Energiemessung in Strom und/oder Spannung,
- Lichtbogenerkennung,
- Erkennung einer Überspannung und/oder Erkennung einer Unterspannung.

6. Schutzgerät nach einem der Ansprüche 1 bis 5, **dadurch gekennzeichnet, dass** die elektronische Verarbeitungseinheit (6) außerdem konfiguriert ist, um ausgehend von der Verarbeitung der für den Wert der Stärke des die dritte Spule (3) durchfließenden proportionalen elektrischen Stroms repräsentativen Signale Daten bezüglich des Verbrauchs des elektrischen Stroms zu bestimmen.

7. Schutzgerät nach einem der Ansprüche 1 bis 6, **dadurch gekennzeichnet, dass** die elektronische Verarbeitungseinheit (6) außerdem eine Kommunikationseinheit enthält, die es ermöglicht, Daten bezüglich der von der dritten Spule (3) gemessenen Werte und/oder ggf. des Verbrauchs von elektrischem Strom zu übertragen, und/oder Daten zu empfangen, die es ermöglichen, den Betrieb der elektronischen Verarbeitungseinheit (6) aus der Ferne zu konfigurieren, um ihre Parameter wie der oder die vorbestimmten Schwellenwert(e) zu verändern.

8. Schutzgerät nach einem der Ansprüche 1 bis 7, **dadurch gekennzeichnet, dass** es außerdem ein elektrisches Schutzbauteil (6d) wie eine Zener-Diode oder eine Transil-Diode enthält, die mit der dritten Spule (3) parallelgeschaltet ist.

9. Schutzgerät nach einem der Ansprüche 1 bis 8, **dadurch gekennzeichnet, dass** die erste Spule (1) und die zweite Spule (2) das mobile Betätigungselement umgeben, und dass die erste und die zweite Spule (1, 2) miteinander verschachtelt sind.

10. Schutzgerät nach Anspruch 9, **dadurch gekennzeichnet, dass** die dritte Spule (3) mit der ersten und der zweiten Spule (1, 2) verschachtelt ist.

## Claims

1. Electric line (L) protection device, said device comprising, in a housing that it comprises, on the one hand, a plurality of coils (1, 2, 3) and a movable actuation element that is configured to be moved, under the effect of a magnetic field, from a rest position to an actuation position, namely a first coil (1) forming an actuator that is able and intended to generate said magnetic field in response to a differential fault occurring in said line (L), a second coil (2) that is able and intended to generate said magnetic field in response to a short-circuit fault occurring in said line (L) and a third coil (3) and, on the other hand, a trip lock (4) that is able and intended, when actuated under the effect of the movement of said movable actuation element, to transition from a first state to a second state, a control unit (5) that is able and intended, following the detection of a differential fault, to control the first coil (1) so as to generate said magnetic field and a detection circuit (8) for detecting said differential fault that is functionally connected to the control unit (5),
the third coil (3) being able and intended to have an electric current flow through it that is proportional to the electric current flowing through said second coil (1) and
**characterized in that** it comprises an electronic processing unit (6) that is functionally connected to said third coil (3) and configured to process the signals that are representative of the value of the strength of said proportional electric current so as to determine, by comparing said value with at least one predetermined threshold value, whether at least one trip threshold has been exceeded and, if so, to control, via the control unit (5), the first coil (1) generating said magnetic field.

2. Protection device according to Claim 1, **characterized in that** the electronic processing unit (6) comprises an electronic processing circuit (6c) such as a microcontroller or a processor, which is configured to process said signals that are representative of the value of the strength of said proportional electric current and to control, via the control unit (5), the first coil (1) generating said magnetic field.

3. Protection device according to Claim 2, **characterized in that** the electronic processing unit (6) further comprises an amplification circuit (6a) that is connected to the third coil (3) and a filtering circuit (6b) that is connected to said amplification circuit (6a), the electronic processing circuit (6c) being connected to said filtering circuit (6b) on the one hand and to the control unit (5) on the other hand.

4. Protection device according to Claim 2 or Claim 3, **characterized in that** the detection circuit (8) for detecting a differential fault comprises, on the one hand, a differential-fault detector (8a), such as for example a torus, and, on the other hand, the electronic processing circuit (6c) which is further configured to process the electrical signal that is representative of the differential fault and generated by said detector (8a) with a view to determining whether said differential fault is present on the line (L) to be protected and to activate, following said detection, the control unit (5) for the first coil (1).

5. Protection device according to any one of Claims 1 to 4, **characterized in that** the electronic processing unit (6), more particularly where applicable the electronic processing circuit (6c) such as the microcontroller or the processor, is configured to perform, on the basis of the processing of the signals that are representative of the value of the strength of the proportional electric current flowing through said third coil (3), at least one of the following measurement and/or detection functions:
- measuring energy in terms of current and/or voltage,
- detecting electric arcs,
- detecting overvoltage and/or detecting undervoltage.

6. Protection device according to any one of Claims 1 to 5, **characterized in that** the electronic processing unit (6) is further configured to determine, on the basis of the processing of the signals that are representative of the value of the strength of the proportional electric current flowing through said third coil (3), data that relate to the consumption of the electric current.

7. Protection device according to any one of Claims 1 to 6, **characterized in that** the electronic processing unit (6) further comprises a communication unit allowing data to be transmitted that relate to the values that are measured by the third coil (3) and/or where applicable to the consumption of electric current, and/or to receive data allowing the operation of the electronic processing unit (6) to be configured remotely so as to modify its parameters such as the one or more predetermined threshold values.

8. Protection device according to any one of Claims 1 to 7, **characterized in that** it further comprises an electronic protection component (6d), such as a Zener diode or a transil diode, which is connected in parallel with the third coil (3).

9. Protection device according to any one of Claims 1 to 8, **characterized in that** the first coil (1) and the second coil (2) surround the movable actuation element and **in that** said first and second coils (1, 2) are nested within each other.

10. Protection device according to Claim 9, **characterized in that** the third coil (3) is nested within said first and second coils (1, 2).
